# EUROPÄISCHE PATENTANMELDUNG

(11) **EP 1 182 592 A1**
(43) Veröffentlichungstag der Anmeldung: **27.02.2002**
(21) Anmeldenummer: 00117851.6
(22) Anmeldetag: 18.08.2000
(51) Int. Cl.: G06F 17/60

(54) **Verfahren zur Prozessmodelierung**

(71) Anmelder: SER Systeme AG Produkte und Anwendungen der Datenverarbeitung, 53577 Neustadt/Wied (DE)
(72) Erfinder: Urbschat, Harry, 26127 Oldenburg (DE); Lapir, Gennady, 79194 Gundelfingen (DE)
(74) Vertreter: Betten & Resch

(57) **Zusammenfassung**

Verfahren zur Realisierung eines computer-implementierten Prozesses, insbesondere computer-implementierter Workflows in einem Unternehmen, wobei der Prozeß einen oder mehrere Prozeßknoten umfaßt, in denen basierend auf der Verarbeitung eines Eingangsinformationen in einen Prozeßknoten ein Prozeßschritt ausgeführt wird, gekennzeichnet durch: Repräsentation eines Prozeßknotens des Prozesses durch ein computer-implementiertes lemfähiges System, insbesondere ein neuronales Netz, das in der Lage ist, eine Klassifikation von Eingangsinformationen anhand von Beispielen zu lernen, wobei die Repräsentation umfaßt: Erstellen eines Inputs für das lernfähige System basierend auf den Eingangsinformationen und einer dieser Eingangsinformation zugeordneten Aktion des Prozeßschrittes; und Lernen des Prozesses anhand von derart erstellten Inputs als Beispielen.

## Beschreibung

Die vorliegende Erfindung betrifft ein Verfahren zur Verfahren zur Realisieurung eines Computer-implementierten Prozesses, insbesondere computer-implementierter Workflows in einem Unternehmen.

### STAND DER TECHNIK

Klassische Workflow Systeme unterstützen Arbeitsabläufe durch die Steuerung von Objekten (Workltems) durch einen vorab festgelegten und modellierten Prozeß. Der Prozeß besteht aus einer Reihe von Arbeitsschritten (Aktivitäten) die miteinander verbunden sind. Die Art der Aktivitäten, ihre Verknüpfung und die jeweils zuständigen Akteure weden im Normalfall in aufwendigen Analyse-Arbeiten ermittelt und idealisiert abgebildet.

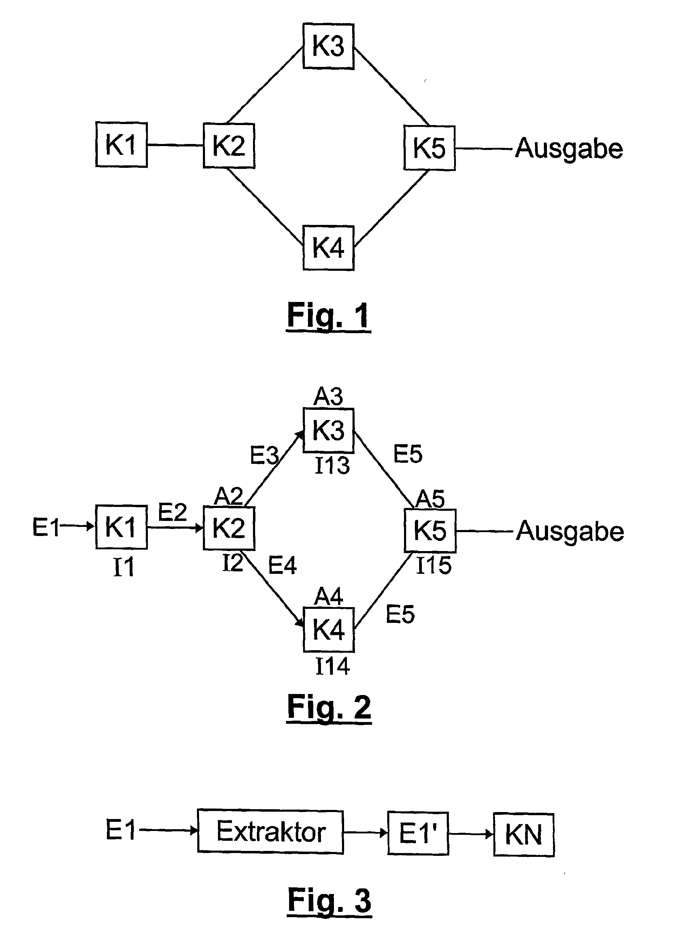

Figur 1 illustriert schematisch einen Prozeß. Den Knoten K1 bis K5 sind dabei jeweils eine oder mehrere Aktivitäten zugeordnet.

Bei der Durchführung einer einzelnen Aktivität, wird der Bearbeiter vom System aber nicht mehr unterstützt. Einige Systeme bieten zwar die Möglichkeit über "Automatismen" vordefinierte Aktionen am Arbeitsplatz ausführen zu lassen, diese sind aber statisch, d.h. sie können nicht flexibel auf die jeweilige Situation reagieren und beschränken sich daher meist auf das Starten einer Applikation oder auf das automatische Öffnen eines Dokumentes im Workltem.

Es ist daher eine Aufgabe der vorliegenden Erfindung, ein flexibles Verfahren zur Realisierung eines computer-implementierten Prozesse zu schaffen.

### ZUSAMMENFASSUNG DER ERFINDUNG

Diese Aufgabe wird im wesentlichen dadurch gelöst, dass Prozeßknotens des Prozesses durch ein computer-implementiertes lernfähiges System, insbesondere ein neuronales Netz, das in der Lage ist, eine Klassifikation von Eingangsinformationen anhand von Beispielen zu lernen, repräsentiert werden,wobei die Repräsentation umfaßt: Erstellen eines Inputs für das lemfähige System basierend auf den Eingangsinformationen und einer dieser Eingangsinformation zugeordneten Aktion des Prozeßschrittes; und Lernen des Prozesses anhand von derart erstellten Inputs als Beispielen.

Dadurch entsteht eine völlig neue Dimension der elektronischen Vorgangsbearbeitung. Die Lösung ermöglicht ohne statische Vordefinitionen, daß die richtigen Informationen zum richtigen Zeitpunkt beim richtigen Bearbeiter sind und erlaubt die automatische Produktion von Ausgängen in Abhängigkeit von Eingangsdaten und Prozeß-Situationen.

### DETAILLIERTE BESCHREIBUNG

Ein einfaches Ausführungsbeispiel der vorliegenden Erfindung wird nun unter Bezugnahme auf Figur 2 beschrieben.

Ein Knoten eines Prozesses ist gekennzeichnet durch Eingangsinformationen E1, E2,.., in den Knoten und durch eine Aktivität A1, A2,.., die in Abhängigkeit von den Eingangsinformationen an dem Knoten ausgeführt wird. Eine Aktivität kann dabei beispielsweise in der Entscheidung bestehen, mit welchem Knoten als nächstes der Prozess fortfahren soll (Verzweigung), aber auch in einer "echten" Aktion, etwa in der Erstellung eines Dokuments (Antwortdokuments) in Reaktion auf die Eingangsinformationen.

Aus Eingangsinformationen eines Knotens und den einem bestimmten Knoten für bestimmmte Eingangsinformationen zugeordnete(n) Aktivitäten werden nun Inputs erstellt, die so aufgebaut sind, daß sie von einem lernfähigen System, etwa einem neuronalen Netz, gelernt werden können. Aus einer Kombination von Eingangsinformation und zugehöriger Aktivität wird also ein Input zum Trainieren eines lernfähigen Systems. Das System ist dabei ein System, das Eingangsinformationen klassifizieren kann, und zwar nach gelernten Klassen eines (ebenfalls gelernten) Klassifikationsschemas. Die Aktionen eines Knotens sind dann die Klassen, die zu bestimmten Eingangsinformationen gehören. Das System lernt dann, Eingangsinformationen automatisch nach durchzuführenden Aktionen zu klassifizieren und entsprechend den gelernten Inputs (Kombinationen aus Eingangsinformationen und Aktionen) neue Eingangsinformationen zu klassifizieren und die der Klassifizierung entsprechende Aktion (Verzweigung nach X, nach Y, Aktion A, Aktion B) auszuführen.

Dies kann z. B. dadurch geschehen, dass der Prozeß manuell mehrfach durchgeführt wird, jeweils die Kombinationen aus Eingangsinformationen und Aktionen zu Inputs zusammengefaßt bzw. daraus Inputs erstellt werden, und diese Inputs dann z. B. von einem neuronalen Netz gelernt werden.

Ist die Lernphase erfolgreich durchgeführt so ist jedem Prozeßknoten ein lernfähiges System zugeordnet, das gelernt hat neue (unbekannte) Eingangsinformationen zu klassifizieren und entsprechende Aktionen automatisch auszuführen.

Somit werden die Prozeßknoten K1,...,Kn jeweils durch lernfähige Systeme repräsentiert oder realisiert, die dann die entsprechenden Prozessschritte automatisch ausführen können.

Mit diesem Verfahren läßt sich nicht nur ein Prozeß "lernen" und durch wiederholtes Lernen ständig Verbessern und verfeinern, es ist vielmehr sogar möglich einen Prozeß mit seinen Knoten und Aktionen überhaupt erst zu definieren. Hierzu werden die manuellen Aktivitäten protokolliert und aus den manuellen Vorgängen können dann-bei Durchführung in ausreichender Zahl- statistische Häufungen herausbilden, die dann als Kombination aus Eingangsinformationen und Aktivitäten zu den Prozeßknoten "werden" bzw. die Prozeßknoten definieren. Die protokollierten Vorgänge werden gelernt und so wird der Prozeß - bzw. seine Abbildung oder Repräsentation durch Knoten, Eingangsinformationen und zugeordnete Aktivitäten- überhaupt erst definiert.

Ein Prozessknoten wird also letztlich durch eine lernfähige Klassifikationsengine realisiert, die beispielsweise ein neuronales Netz sein kann. Sie kann aber beispielsweise auch eine Voronoi-tesselation eines Hyperraums zur Repräsentation der Klassen verwenden. Dies ist beispielsweise im Detail beschrieben in der Europäischen Patentanmeldung vom 28.4.1999 mit der Anmeldenummer 99108354.4 der selben Anmelderin (Classification method and apparatus), die hiermit durch Bezugnahme aufgenommen ist. Eine Realisierung einer derartigen Engine besteht beispielsweise in der Engine SERbrainware, die von SER Systeme AG, Deutschland, hergestellt und vertrieben wird.

Eine weitere Möglichkeit zur Realisierung eines Prozessknotens durch ein lernfähiges System besteht in der Verwendung eines assoziativen Speichers. In Frage kommt hier beispielsweise ein assoziativer Speicher wie er in der Europäischen Patentanmeldung mit dem Titel "Associative Memory" beschrieben wird, die von der selben Anmelderin am selben Tag eingereicht wurde wie die vorliegende Anmeldung und hiermit durch Bezugnahme aufgenommen wird.

In einem solchen assoziativen Speicher werden beispielsweise Eingangsinformationen zusammen mit zugeordneten Aktionen abgespeichert. Basierend auf unbekannten Eingangsinformationen wird dann mittels assoziativer Suche ein zu diesen Eingangsinformationen möglichst ähnliches Dokument gesucht und beispielsweise die mit diesem Dokument abgespeicherte Aktion ausgeführt oder dem Benutzer zur Ausführung vorgeschlagen.

In einem weiteren Ausführungsbeispiel ist einem oder mehreren Knoten jeweils ein Extraktor vorgeschaltet. Dies ist schematisch in Fig. 3 dargestellt. Dabei handelt es sich um-ein Modul, das aus den Eingangsinformationen El' bestimmte Informationen extrahieren oder herausfiltern kann, etwa den Namen, eine Adresse, oder ähnliches. Die so erhaltenen extrahierten Informationen EI' werden dann als Eingangsinformationen für den Prozeßknoten verwendet.

Ein derartiger Extraktor wird beispielsweise beschrieben in der Europäischen Patentanmeldung der selben Anmelderin mit der Anmeldenummer 00103810.8 (Method and appartus of processing electronic documents) vom 23.2.1000, die hiermit durch Bezugnahme aufgenommen wird.

Ein weiteres Ausführungsbeispiel beschäftigt sich mit dem Fall unvollständiger Eingangsinformationen für einen Knoten. Dies kann beispielsweise dazu führen, dass eine Klassifikation nicht mehr oder zumindest nicht mehr mit ausreichende Konfidenz möglich ist. Eine assoziative Suche basierend auf den unvollständigen Eingangsinformationen als Suchanfrage kann dann die vollständigen Eingangsinformationen zutage fördern, vorausgesetzt sie sind bereits im assoziativen Speicher abgespeichert.

Bei einem weiteren Ausführungsbeispiel handelt es sich bei der in dem betreffenden Prozessknoten durchzuführenden Aktion um die Zuordnung eines Index eines Dokumentenbestandes zu den Eingangsinformationen, also um eine automatische Indizierung. Die Indices des Dokumentenbestandes sind in diesem Fall die Klassen bzw. ihre Zuordnung zu den Eingangsinformationen die Aktivitäten. Werden die Indices des Dokumentenbestandes durch die Klassifikations-engine gelernt, so kann eine automatische Indexzuweisung zu den Eingangsinformationen erfolgen. Damit können dann beispielsweise die Eingangsinformationen automatisch in der richtigen Akte (File, directory) abgelegt werden.

Nachfolgend werden einige Anwendungsfälle des Verfahrens sowie verschiedene Variationen davon genauer beschrieben.

Eingangsinformationen werden in drei unterschiedliche Kategorien eingeteilt:
- Klassifizierbar - Verfahrensbearbeitung ohne zusätzliche Informationen möglich
- Klassifizierbar - Verfahrensbearbeitung nur mit zusätzlicher Informationen möglich
- Nicht klassifizierbar - Entscheidung über die weitere Bearbeitung durch Supervisor

Durch diese unterschiedlichen Kategorien kann die Unterstützung der Vorgangsbearbeitung durch die Prozeßknotenrealisierung mittels einer lernfähigen Klassifikationsengine in verschiedenen Tiefen deutlich gemacht werden.

Für die erste Kategorie wird abhängig vom Typ des Eingangeseventuell mit zwischengeschaltetem Extraktor - der richtige Prozeß gestartet. Im Prozeß bestimmt die Klassifikationsengine mit Auswählen einer Aktivität den weiteren Prozessverlauf im Rahmen des vordefinierten Modells. Die Entscheidung über die weitere Bearbeitung ist also nur innerhalb der vorgegebenen Regeln des Prozesses möglich.

Die zweite Kategorie ergänzt diese Möglichkeiten um das automatische Zusammenstellen zugehöriger Informationen. Damit wird sichergestellt, daß der Bearbeiter beim Öffnen des Work Item alle relevanten Zusatzinformationen automatisch - ohne eigene Recherchen - zur Verfügung hat.

Die dritte Kategorie zeigt zum Einen die "Ausnahmebehandlung" unbekannter Eingänge, gibt aber auch ein Beispiel, wie durch Einsatz der assoziativen Suche durch einen assoziativen Speicher nicht vordefinierte Prozesse ( ad-hoc-Prozesse ) im Laufe des Betriebes vom System selbst automatisiert werden können. Das notwendige Wissen wird hierbei aus den Protokolldaten des Systems selbständig aufgebaut.

Beispiel Funktionsablauf - Eingangskategorie 1:
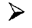 Die Adress-Daten aus dem Eingang werden extrahiert
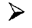 Für den Eingang wird ein Work Item, mit dem für den Eingangstyp festgelegten Prozeß instanziert
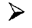 Die extrahierten Adressdaten werden zum Work Item gespeichert
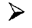 Der Bearbeiter, der das Antwortschreiben erstellen soll öffnet das Workltem
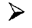 Das System legt automatisch das richtige Antwortschreiben zum Eingang an, das als Template im zentralen Repository (Speicher) hinterlegt ist. Die Daten des Einsenders und andere Indexdaten werden automatisch in das Antwortschreiben übernommen.
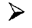 Der Bearbeiter kann das Eingangsschreiben einsehen, das Ausgangsschreiben ergänzen und danach die Auswahl bestätigen.
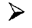 Das System schlägt automatisch den richtigen Adressaten für das Workltem vor.
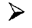 Der Bearbeiter kann Versandinformationen ergänzen und die Auswahl bestätigen.
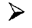 Das Workltem wird automatisch versendet.

Varianten:
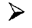 Kann ein Eingang nicht automatisch klassifiziert werden, so wird das Eingangsschreiben für den Bearbeiter geöffnet.
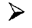 Er wählt aus der Liste der möglichen Dokument-Vorlagen des Repository - beispielsweise mittels einer assoziativen Suche - die passende Vorlage aus und erstellt das Schreiben manuell. Diese Daten werden danach automatisch in die Wissensbasis der Klassifikationsengine übernommen
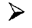 Kann der Adressat für das Workltems nicht eindeutig automatisch bestimmt werden, so wählt der Bearbeiter den Adressaten manuell aus. Diese Daten werden danach automatisch in die Wissensbasis der Klassifikationsengine übernommen

Funktionsablauf- Eingangskategorie 2:
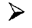 Die Adress-Daten und die Kundennummer aus dem Eingang werden extrahiert
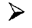 Für den Eingang wird ein Work Item, mit dem für den Eingangstyp festgelegten Prozeß instanziert
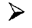 Die extrahierten Adressdaten und die Kundennummer werden zum Work Item gespeichert
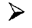 Eine automatische Aktivität im Prozeß sucht nach bestehenden Work Items mit der selben Kundenummer. Werden Einträge gefunden, wird automatisch eine Referenz zum neuen Work Item erstellt.
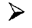 Das System leitet das Work Item automatisch an den festgelegten Bearbeiter weiter
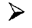 Der Bearbeiter, der das Antwortschreiben erstellen soll öffnet das Workltem und hat automatisch Einsicht zu den referenzierten Objekten ( Sicht auf alle Verfahren des Kunden )
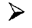 Das System legt automatisch das richtige Antwortschreiben zum Eingang an, das als Template im zentralen Repository hinterlegt ist. Die Daten des Einsenders und andere Indexdaten werden automatisch in das Antwortschreiben übernommen.
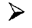 Der Bearbeiter kann das Eingangsschreiben einsehen, das Ausgangsschreiben ergänzen und danach die Auswahl bestätigen.
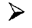 Das System schlägt automatisch den richtigen Adressaten für das Workltem vor.
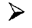 Der Bearbeiter kann Versandinformationen ergänzen und die Auswahl bestätigen.
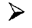 Das Workltem wird automatisch versendet.

Varianten:
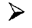 Kann ein Eingang nicht automatisch klassifiziert werden, so wird das Eingangsschreiben für den Bearbeiter geöffnet.
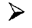 Er wählt aus der Liste der möglichen Dokument-Vorlagen -eventuell eingeschränkt durch eine assoziative Suche - des Repository die passende Vorlage aus und erstellt das Schreiben manuell. Diese Daten werden danach automatisch in die Wissensbasis der Klassifikationsengine übernommen.
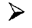 Kann der Adressat für das Workltems nicht eindeutig automatisch bestimmt werden, so wählt der Bearbeiter den Adressaten manuell aus. Diese Daten werden damit automatisch in die Wissensbasis der Klassifikationsengine übernommen.

### Funktionsablauf- Eingangskategorie 3:

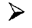 Für den Eingang wird ein Work Item, mit dem für den Eingangstyp festgelegten Prozeß instanziert
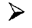 Eine automatische Aktivität im Prozeß verwendet den Inhalt des Eingangsdokumentes zur assoziativen Suche nach bereits bearbeiteten Eingängen mit ähnlichem Kontext. Werden Einträge gefunden, wird automatisch eine Verknüpfung ( Referenz ) zu dem neuen Work Item hergestellt. Danach prüft das System welcher User die Bearbeitung durchgeführt hat und leitet das Work Item automatisch an ihn weiter.
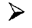 Der Text des Eingangsdokumentes wird mit der ID des Work Items in das Repository gespeichert ( Erweiterung der Wissensbasis ).
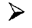 Der Bearbeiter öffnet das Workltem und hat automatisch Einsicht zu den referenzierten Objekten ( Sicht auf alle Verfahren mit ähnlichem Kontext ). Er kann auf Basis der bereits bearbeiteten Fälle Rückschlüsse auf die richtige Bearbeitung ziehen und bei Bedarf eine neue Klasse für diesen Typ von Eingängen bilden.

Varianten:
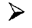 Wir kein Eingang mit ähnlichem Kontext im Repository gefunden, wird der Text des Eingangsdokumentes mit dem Index des Work Item gespeichert und das Work Item an den Supervisor weitergeleitet.
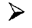 Der Supervisor entscheidet manuell, wer die Bearbeitung durchführen soll. Diese Entscheidungen über die Zuteilung der Eingänge stehen automatisch als Wissensbasis für die Verteilung neuer Eingänge dieses Kontextes zur Verfügung.

Gemäß einem weiteren Ausführungsbeispiel enthalten die Prozessmodelle Bearbeitungsschritte, in denen ein Benutzer ein eingehendes Dokument beantworten muss. Hierbei kann die Applikation den Bearbeiter unterstützen, in dem ihm Antwortvorschläge angezeigt werden, die in der Vergangenheit zu Schreiben dieser Dokumentenklasse verfasst wurden. Wenn das vorgeschlagene Antwortschreiben direkt unverändert verwandt werden kann, dann bestätigt der Bearbeiter dies nur und veranlasst damit dessen Versand. Wenn die bei der Klassifizierung gefundene Übereinstimmung des jeweiligen Dokuments mit den gebildeten Dokumentenklassen hoch genug ist (entsprechend der gewählten Konfigurationsparameter), dann kann aus der Anwendung heraus auch direkt eine (automatische) Antwort erstellt werden.

Oft wird die Weiterleitung der Dokumente zur (arbeitsteiligen) Bearbeitung des jeweiligen Prozesses vom Inhalt des Eingangsdokuments und der davon abgeleiteten Ergebnisdokumente bestimmt. So wird häufig ein spezieller Versicherungsfall oder eine ganz spezielle Anfrage zu bestimmen Sachverhalten immer wieder zu demselben Experten weitergeleitet. In solchen Fällen kann das iSystem den optimalen Bearbeitungsweg und den am besten geeigneten Bearbeiter für das Eingangsdokument automatisch auswählen. Es ,lernt beispiels-orientiert' aus den Entscheidungen der Mitarbeiter, welches der optimale Weiterleitungspfad für den jeweiligen Dokumententyp ist.

Für die Erstellung automatischer Beantwortung von Eingangsschreiben lässt sich der folgende Bearbeitungsablauf realisieren:
□ Die Eingangspost wird stapelweise gescannt.
□ Ein Klassifikator und/oder Extraktor klassifiziert die Eingangsdokumente und extrahiert daraus relevante Informationen (z.B. Rechnungs-Nr., Datum etc.), die in der weiteren Bearbeitung genutzt werden können.
□ Für die Bearbeitung eines jeden Dokuments wird ein work item erzeugt, das in das dem Dokumententyp entsprechende Prozessmodell eingereiht wird.
□ Das work item wird in den (elektronischen) Eingangspostkorb eines geeigneten Bearbeiters eingestellt. Dieser öffnet es zur Bearbeitung.
□ Die Anwendung schlägt ein Antwortschreiben vor, das in der zentralen Wissensdatenbank (repository) enthalten ist. Die aus dem Eingangsschreiben extrahierten Daten, ergänzt um weitere Informationen (z.B. dem Namen des Absenders) werden automatisch in das Antwortschreiben übernommen.
□ Der Bearbeiter kontrolliert das vorbereitete Ausgangsschreiben und korrigiert es im Bedarfsfalle.
□ Anschließend wird das Antwortschreiben automatisch von der Anwendung versandt.

Zum obigen Ablauf gibt es verschiedene Alternativen.

Wenn das Eingangsschreiben mit der notwendigen Konfidenz einer Dokumentenklasse zugeordnet werden kann, dann wird es ohne einen Antwortvorschlag an den Bearbeiter gesandt. Dieser wählt dann manuell anhand einer Liste der in der Wissensdatenbank enthalten Antworten die seiner Meinung nach am besten geeignete Antwort aus. Diese Auswahlentscheidung lernt die Anwendung und erweitert damit die bisherige Wissensdatenbank. Damit kann beim nächsten Mal automatisch eine geeignete Antwort auf ein Eingangsschreiben dieser Art gefunden werden. Falls die erforderlichen Informationen nicht automatisch aus dem eingegangenen Schreiben extrahiert werden können, dann gibt der Bearbeiter diese Informationen manuell ein.

Ein Prozess muss nicht vollständig definiert sein, bevor er eingesetzt werden kann. Der Prozess kann einfach direkt verbessert werden und entwickelt sich damit parallel zu den Veränderungen des abgebildeten Geschäftsprozesses weiter. Auf diese Weise können langwierige Modellierungen im Detail vermieden werden, der Nutzen solcher Prozesssteuerung stellt sich früher ein. Auch die Akzeptanz bei den Anwendern ist in der Regel leichter zu gewinnen, da sie selbst an der schrittweisen Prozessverbesserung beteiligt werden können (KPV = Kontinuierliche Prozessverbesserung).

Nachfolgend wird in einem weiteren Ausführungsbeispiel die Realisierung eines Prozesses mittels der Klassifikationsengine SERbrainware beschrieben.

Die Wissensdatenbank von SERbrainware wird vorab durch die Eingabe von Daten bereits abgelaufener Prozesse trainiert. Die Extraktion der Daten erfolgt über Reports. Durch das Trainieren werden Klassen gebildet.

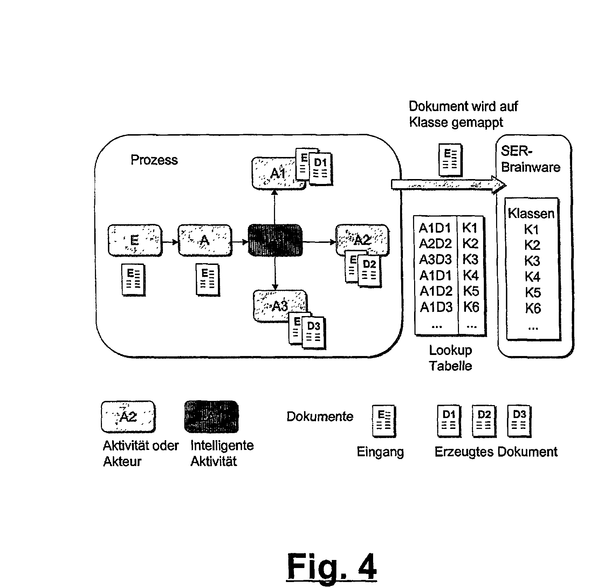

In einer intelligenten Aktivität nimmt das System dem Benutzer die Entscheidung ab, welche Aktivität als nächste auszuführen ist und welches Dokument auf Basis einer Vorlage zu erstellen ist. In der Phase des Trainierens wird dazu eine Zuordnung von möglichen Aktivitäten und erstellten Dokumenten aufgebaut. Die Funktionsweise des Systems ist schematisch in Fig.4 dargestellt.

Für die Zuordnung wird eine Lookup-Tabelle verwendet, in der Aktivität/Akteur plus Art des erzeugten Dokuments jeweils Klassen in SERbrainware zugeordnet sind.

Dieses einfache Modell kann theoretisch erweitert werden, indem mehrere Views in SERbrainware aufgebaut werden.
- Aktivitäts/Akteur-View, in dem die Eingangsdokument - Typen bestimmten Zielen zugeordnet werden.
- Dokument-View, in dem die Eingangsdokument - Typen bestimmten zu erzeugenden Dokumenten zugeordnet werden.

In Fig. 4 gibt einfache Aktivitäten, die vom User ausgeführt werden und intelligente Aktivitäten, die automatisch ablaufen. Die Implementation der intelligenten Aktivität erfolgt über Aktivitätsscripts. Ein Aktivitätsscript kann in einer Aktivität geladen und exekutiert werden.

Zunächst wird geprüft, ob der "Intelligent Mode" (automatische Ausführung) aktiviert ist. Wenn ja, wird das Script ausgeführt, wenn nein wird das Work Item regulär geöffnet.

Das Aktivitätsscript führt folgende Schritte durch:
- Anfordern des Eingangsschreibens und Übergabe an SERbrainware, SERbrainware stellt fest, zu welcher Klasse das Eingangsschreiben gehört. Wenn Brainware einen schlechten Konfidenzlevel zurückliefert, dann werden alle folgenden Schritte übersprungen und lediglich das Dokument geöffnet.
- Aufsuchen der Look-Up Tabelle und merken des zu erzeugenden Ausgangsschreibens und des in SERfloware als nächstes zu adressierenden Akteurs.
- Laden des Template des Ausgangsschreibens.
- Laden der Attribute des Eingangsschreibens.
- Einmergen der Attribute in das Ausgangsschreibens.
- Speichern des Ausgangsschreibens.
- Aufrufen des Editors zur Nachbearbeitung, wenn der Bearbeiter Änderungen durchführt, dann nochmalige Speicherung.
- Aufruf der Weiterleiten-Funktionalität mit der Voreinstellung des über SERbrainware und die Lookup-Tabelle ermitttelten Ziels.

Der Benutzer bestätigt und das Work Item wird automatisch versendet. Somit besteht in diesem Ausführungsbeispiel eine Aktivität aus einer Vielzahl von einzelnen Aktionen.

## Patentansprüche

1. Verfahren zur Realisierung eines computer-implementierten Prozesses, insbesondere computer-implementierter Workflows in einem Unternehmen, wobei der Prozeß einen oder mehrere Prozeßknoten umfaßt, in denen basierend auf der Verarbeitung eines Eingangsinformationen in einen Prozeßknoten ein Prozeßschritt ausgeführt wird, **gekennzeichnet durch**:
Repräsentation eines Prozeßknotens des Prozesses **durch** ein computer-implementiertes lernfähiges System, insbesondere ein neuronales Netz, das in der Lage ist, eine Klassifikation von Eingangsinformationen anhand von Beispielen zu lernen, wobei die Repräsentation umfaßt: Erstellen eines Inputs für das lernfähige System basierend auf den Eingangsinformationen und einer dieser Eingangsinformation zugeordneten Aktion des Prozeßschrittes; und Lernen des Prozesses anhand von derart erstellten Inputs als Beispielen.

2. Verfahren nach Anspruch 1 zur Generierung eines automatisierten Prozesses, welches umfaßt:
Ausführen von Prozessschritten durch den Benutzer, bei denen der Benutzer manuell Eingangsinformationen verarbeitet und Aktionen ausführt;
Speicherung der Kombination aus Eingangsinformationen und zugeordneten Aktionen;
Erzeugung von Klassifikatoren für Kombinationen aus Eingangsinformationen und Aktionen, um dadurch die Prozeßknoten, die zugehörigen Inputs und die zugehörigen Aktionen zu definieren..

3. Verfahren nach Anspruch 1 oder 2, welches ferner umfaßt:
Automatisches Ausführen des Prozesses für unbekannte Eingangsinformationen basierend auf den gelernten Beispielen.

4. Verfahren nach Anspruch 1,2 oder 3, welches umfaßt:
Verketten mehrerer Prozeßknoten zu einem Prozeß, wobei der Ausgang des einen Prozesses als Input des nächsten dient.

5. Verfahren nach Anspruch 1,2,3 oder 4, wobei eine Aktion eines Prozeßschrittes eines oder mehrere der folgenden Elemente umfaßt:
Durchführen einer Entscheidung welcher Prozeßschritt als nächstes ausgeführt werden soll;
Erstellen eines Antwortdokumentes zu den Eingangsinformationen.

6. Verfahren nach einem der vorhergehenden Ansprüche, welches ferener umfaßt:
Extrahieren von einen oder mehreren Informationen mit bestimmtem Informationsgehalt aus den Eingangsinformationen;
Verwenden der extrahierten Informationen als Input für den Prozeßknoten.

7. Verfahren nach einem der vorhergehenden Ansprüche, welches ferner umfaßt:
Speicherung von bereits gelernten Inputs (Eingangsinformationen und zugeordnete Aktion) in einem Assoziativ-Speicher;
Assoziative Suche nach ähnlichen Inputs basierend auf extrahierten Informationen;
Verarbeitung der Eingangsinformationen entsprechend dem oder den Aktionen, die einem bereits gelernten und aufgefundenen Dokument zugeordnet sind.

8. Verfahren nach einem der vorhergehenden Ansprüche, welches ferener umfaßt:
Verwenden von unvollständigen Eingangsinformationen als Input für einen assoziative Suche zum Auffinden von vollständigen Eingangsinformationen, die den unvollständigen Eingangsinformationen zugeordnet sind.

9. Verfahren nach einem der vorhergehenden Ansprüche, bei dem die in dem Prozeßschritt ausgeführten Aktionen umfassen:
Ermitteln eines Klassifikators, der dem Index zu Indizierung eines Dokumentenbestandes entspricht, um die Ablage der Eingangsinformation im entsprechenden Dokument des Dokumentenbestandes zu ermöglichen.

10. Verfahren nach einem der vorhergehenden Ansprüche, bei dem
das lernfähige System eine Voronoi-tesselation eines Hyperraums zur Repräsentation der Klassen verwendet.

11. Verfahren nach einem der vorhergehenden Ansprüche, bei dem
die Klassifikation von Eingangsinformationen eine nearest neighbour-Kassifikation unter Verwendung eines assoziativen Speichers ist.

12. Verfahren nach einem der vorhergehenden Ansprüche, bei dem das gespeicherte Prozeßwissen, das zur Ermittlung der auszuführenden Aktion dient, eines oder mehrere der folgenden Elumente umfaßt:
Information über Aktionen, die dem betreffenden Knoten bisher erfolgt sind;
Informationen über die bisherigen Aktionen und/oder die aktuellen Zustände in anderen Prozeßknoten.

13. Vorrichtung zur Realisierung eines computer-implementierten Prozesses, insbesondere computer-implementierter Workflows in einem Unternehmen, wobei der Prozeß einen oder mehrere Prozeßknoten umfaßt, in denen basierend auf der Verarbeitung eines Eingangsinformationen in einen Prozeßknoten ein Prozeßschritt ausgeführt wird, **gekennzeichnet durch**:
eine Einrichtung zur Durchführung eines Verfahrens gemäß einem der Ansprüche 1 bis 12.

14. Computerprogramm zur Realisierung eines Computer-implementierten Prozesses, insbesondere computer-implementierter Workflows in einem Unternehmen, wobei der Prozeß einen oder mehrere Prozeßknoten umfaßt, in denen basierend auf der Verarbeitung eines Eingangsinformationen in einen Prozeßknoten ein Prozeßschritt ausgeführt wird, **gekennzeichnet durch**:
Computerprogrammcode, der einen Computer in die Lage versetzt, ein Verfahrens gemäß einem der Ansprüche 1 bis 12 auszuführen.
